(19) **Europäisches Patentamt / European Patent Office / Office européen des brevets**

(11) **EP 4 697 118 A1**

(12) **EUROPEAN PATENT APPLICATION**
published in accordance with Art. 153(4) EPC

(43) Date of publication:
**18.02.2026 Bulletin 2026/08**

(21) Application number: **24838568.4**

(22) Date of filing: **24.06.2024**

(51) International Patent Classification (IPC):
**G05D 1/46** (2024.01)

(52) Cooperative Patent Classification (CPC):
**G05D 1/648; G05D 1/46;** G05D 2109/10

(86) International application number:
**PCT/CN2024/100956**

(87) International publication number:
**WO 2025/011312 (16.01.2025 Gazette 2025/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.07.2023 CN 202310842893**

(71) Applicant: **Guangzhou Xaircraft Technology Co., Ltd.**
**Guangzhou, Guangdong 510000 (CN)**

(72) Inventor: **LI, Zhihang**
**Guangzhou, Guangdong 510000 (CN)**

(74) Representative: **Murgitroyd & Company**
**165-169 Scotland Street**
**Glasgow G5 8PL (GB)**

(54) **OPERATION LINE GENERATION METHOD, APPARATUS, AND DEVICE, AND STORAGE MEDIUM**

(57) Disclosed are an operation line generation method and apparatus, a device, and a storage medium. According to embodiments of the present application, by determining, based on boundary information of a target plot, a reference operation reference line and an edge-sweeping reference line within the target plot, a current operation route is generated based on the reference operation reference line, and an edge-sweeping operation route is generated based on the edge-sweeping reference line. When operation in a main plot of the target plot based on the current operation route is completed, a stop timing may be determined based on the current operation route and the boundary information of the target plot, and the operation may be continued by moving to a next operation route. After completing the operation on the main plot of the target plot based on the current operation route, border operations may be performed on the target plot based on the edge-sweeping reference line, improving the operation coverage of the target plot. By uniformly managing different operation lines within the target plot, a process of repeated marking is omitted, reducing management difficulty of different operation lines.

Obtaining boundary information of a target plot, and determining, based on the boundary information, a reference operation reference line and an edge-sweeping reference line from a plurality of plot boundaries of the target plot — S101

Determining, based on the reference operation reference line, a current operation route within the target plot — S102

Generating, based on the edge-sweeping reference line, an edge-sweeping operation route within the target plot, the edge-sweeping operation route being used for an operation device to perform edge-sweeping operation after completing, based on the current operation route, operation of a main plot within the target plot — S103

FIG. 1

# EP 4 697 118 A1

## Description

### CROSS-REFERENCE TO RELATED APPLICATIONS

The present application claims priority to a Chinese patent application filed on July 10, 2023, with application number 202310842893.3 and entitled "OPERATION LINE GENNERATION METHOD AND APPARATUS, DEVICE, AND STORAGE MEDIUM". The disclosure of the aforementioned application is hereby incorporated by reference in its entirety.

### TECHNICAL FIELD

Embodiments of the present application relate to the field of path planning technology, and in particular, to an operation line generation method and apparatus, a device, and a storage medium.

### BACKGROUND

When controlling an operation device such as an agricultural machine, path planning of the operation device is usually based on an AB straight-line method. That is, coordinates of a starting point A and an ending point B are determined within a target plot, then a line between A and B is connected and extended to obtain a reference line. A current distance from the operation device to the reference line is calculated. A direction and a quantity of translations is calculated with reference to a translation distance. Finally, the reference line is translated to obtain a current operation path.

In this regard, the inventor found that when an operator controls the operation device to perform mobile operations according to the current operation path, it is generally necessary to determine a stop timing to turn the operation device round based on experience or manual observation, so that operations on the next path is performed, which may easily lead to inappropriate stop timing and reduce a working area, thereby reducing an operation coverage area.

### SUMMARY

Embodiments of the present application provide an operation line generation method and apparatus, a device, and a storage medium, to resolve a technical problem of low operation coverage area caused by difficulty in determining a stop timing in related technologies, thereby effectively improving the operation coverage area of the operation device.

In a first aspect, embodiments of the present application provide an operation line generation method, including: obtaining boundary information of a target plot, and determining, based on the boundary information, a reference operation reference line and an edge-sweeping reference line from a plurality of plot boundaries of the target plot; determining, based on the reference operation reference line, a current operation route within the target plot; and generating, based on the edge-sweeping reference line, an edge-sweeping operation route within the target plot, the edge-sweeping operation route being used for an operation device to perform edge-sweeping operation after completing, based on the current operation route, operation of a main plot within the target plot.

In a second aspect, the embodiments of the present application provide an operation line generation device, including: a memory and one or more processors. The memory is configured to store one or more programs. When the one or more programs are executed by the one or more processors, the one or more processors are configured to implement the following steps: obtaining boundary information of a target plot, and determining, based on the boundary information, a reference operation reference line and an edge-sweeping reference line from a plurality of plot boundaries of the target plot; determining, based on the reference operation reference line, a current operation route within the target plot; and generating, based on the edge-sweeping reference line, an edge-sweeping operation route within the target plot, the edge-sweeping operation route being used for an operation device to perform edge-sweeping operation after completing, based on the current operation route, operation of a main plot within the target plot.

In a third aspect, the embodiments of the present application provide a storage medium used for storing computer-executable instructions. The computer-executable instructions are configured to implement the following steps when executed by a computer processor: obtaining boundary information of a target plot, and determining, based on the boundary information, a reference operation reference line and an edge-sweeping reference line from a plurality of plot boundaries of the target plot; determining, based on the reference operation reference line, a current operation route within the target plot; and generating, based on the edge-sweeping reference line, an edge-sweeping operation route within the target plot, the edge-sweeping operation route being used for an operation device to perform edge-sweeping operation after completing, based on the current operation route, operation of a main plot within the target plot.

In a fourth aspect, the embodiments of the present application provide an operation line generation apparatus, including a reference line determination module, an operation line determination module, and an edge-sweeping line determination module. The reference line determination module is configured to obtain boundary information of a target plot, and determining, based on the boundary information, a reference operation reference line and an edge-sweeping reference line from a plurality of plot boundaries of the target plot; the operation line determination module is configured to determine, based on the reference operation reference line, a current operation route within the target plot; the edge-sweeping line determination module is configured to generate, based on the edge-sweeping reference line, an edge-sweeping operation route within the target plot, the edge-sweeping operation route being used for an operation device to perform edge-sweeping operation after completing, based on the current operation route, operation of a main plot within the target plot.

In view of above, by determining, based on boundary information of a target plot, a reference operation reference line and an edge-sweeping reference line within the target plot, a current operation route is generated based on the reference operation reference line, and an edge-sweeping operation route is generated based on the edge-sweeping reference line. When operation of a main plot within the target plot is completed based on the current operation route, a stop timing may be determined based on the current operation route and the boundary information of the target plot and the operation device may be moved to the next operation route to continue the operation, so that the stop timing of the operation device is closer to a plot boundary, effectively improving an operation coverage area. After the operation of the main plot within the target plot is completed based on the current operation route, edge-sweeping operation may be performed on the target plot based on the edge-sweeping reference line, thereby improving an operation coverage rate of the target plot. Meanwhile, by uniformly managing different operation lines within the target plot, a process of repeated marking is omitted, thereby reducing management difficulty of different operation lines.

## BRIEF DESCRIPTION OF THE DRAWINGS

FIG. 1 is a schematic flowchart of an operation line generation method provided by an embodiment of the present application.

FIG. 2 is a schematic diagram of an edge-sweeping operation route provided by an embodiment of the present application.

FIG. 3 is a schematic flowchart of a method for determining, based on a reference operation reference line, a current operation route within a target plot provided by an embodiment of the present application.

FIG. 4 is a schematic diagram of reference operation lines of a concave polygon provided by an embodiment of the present application.

FIG. 5 is a schematic flowchart of a method for generating, based on an edge-sweeping reference line, an edge-sweeping operation route within the target plot provided by an embodiment of the present application.

FIG. 6 is a schematic diagram of a fitting reference line provided by an embodiment of the present application.

FIG. 7 is a schematic structural diagram of an operation line generation apparatus provided by an embodiment of the present application.

FIG. 8 is a schematic structural diagram of an operation line generation device provided by an embodiment of the present application.

## DETAILED DESCRIPTION OF THE EMBODIMENTS

In order to make the purpose, technical solutions, and advantages of the present application clearer, specific embodiments of the present application will be further described in detail below with reference to accompanying drawings. It should be understood that specific embodiments described herein are only used to explain the present application, rather than to limit it. In addition, it should be noted that for the convenience of description, only parts related to the present application are shown in the drawings, rather than all the content. Before discussing the exemplary embodiments in more detail, it should be mentioned that some exemplary embodiments are described as processes or methods depicted as flowcharts. Although the flowchart describes the operations (or steps) as sequential processes, many of these operations may be performed in parallel, concurrently, or simultaneously. In addition, the order of the operations may be rearranged. When the operations are completed, the above process may be terminated, but there may also be additional steps not included in the accompanying drawings. The above process may correspond to methods, functions, procedures, subroutines, subprograms, etc.

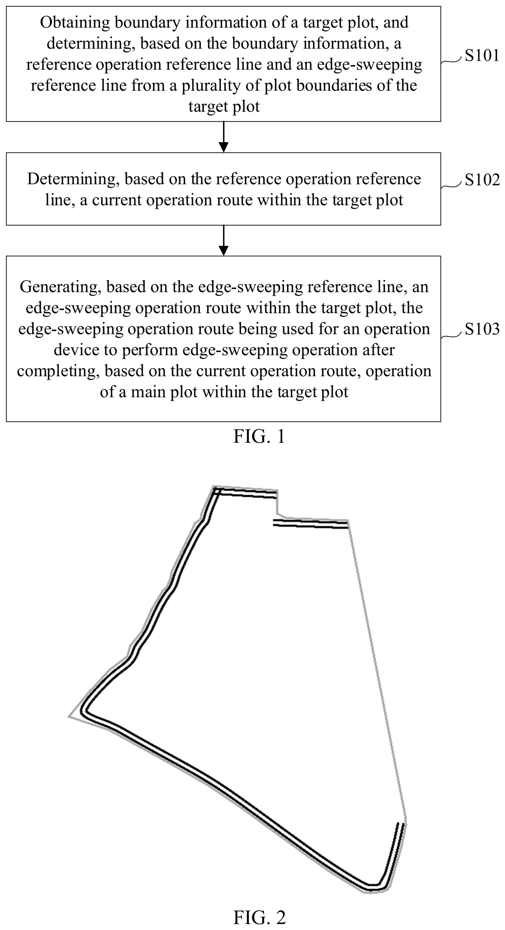

FIG. 1 is a schematic flowchart of an operation line generation method provided by an embodiment of the present application. The present embodiment may be applied to scenarios where an operation device performs plowing or sowing in a designated plot according to an operation line. The operation device may be an agricultural machine. The operation line generation method may be executed by an operation line generation apparatus, which may be implemented through hardware and/or software and integrated into an operation line generation device.

The following describes execution of the operation line generation method by the operation line generation apparatus as an example. Referring to FIG. 1, the operation line generation method includes:

S101: obtaining boundary information of a target plot, and determining, based on the boundary information, a reference operation reference line and an edge-sweeping reference line from a plurality of plot boundaries of the target plot.

In one embodiment, the target plot may be land of a target area to be sown, and a shape of the target plot may be regular or irregular. The boundary information of the target plot may be a perimeter of the target plot, or a quantity of boundary lines and a shape of the boundary lines, such as straight boundary lines, curved boundary lines, etc. The boundary information of the target plot may be regarded as a data set composed of a plurality of latitude and longitude data points, which may reflect the boundary shape and size of the target plot, as well as coordinates of each point on the boundary lines. The data points may be reasonably and accurately collected through GPS or image recognition technology, or by moving a positioning device around the boundary of the target plot, marking each boundary point and recording the latitude and longitude coordinate information of each point. Alternatively, map projection technology or other related tools may be used to convert latitude and longitude coordinates into a plane coordinate system with X and Y coordinates, thereby avoiding missed measurements or ignoring corners of a plot, thereby ensuring completeness and accuracy of the obtained boundary information of the target plot. The positioning device may be handheld, which may better fit the boundary of the target plot without considering parameters of a large measuring equipment, such as a width. In addition, the boundary information may also be obtained through manual mapping on an image base map using data obtained from drone remote sensing, or automatically generated through image recognition technology. The reference operation reference line may be obtained by using the positioning device to obtain coordinates of a starting point A and an ending point B within the target plot, connecting the two points A and B and extending both ends to obtain an AB reference operation reference line. Since it is difficult to comprehensively cover the target plot using a plurality of straight segments, after straight-line work within the target plot is completed, edge-sweeping work is performed at the boundary of the plot to increase a coverage area of the work. The edge-sweeping reference line may be a line selected by a user on the boundary. A quantity of edge-sweeping reference lines can be determined based on an actual requirement.

The user may operate on the operation line generation device to select one of the boundary lines as the reference operation reference line. The operation line generation apparatus may pre-generate a plurality of reference operation routes based on the reference operation reference line. Alternatively, one or more operation reference routes near the agricultural machine may be generated based on the reference operation reference line and a position of the agricultural machine during an operation process of the agricultural machine.

S102: determining, based on the reference operation reference line, a current operation route within the target plot.

The reference operation reference line is translated and copied to obtain an operation line. A plurality of operation lines may be planned on the target plot, and one line may be selected from the plurality of operation lines to be determined as the current operation route, which may be a straight line. The current operation route may be used to determine a route that the operation device is about to perform agricultural work on. The current operation route within the target plot may be determined based on a distance between the operation device and the reference operation reference line. For example, on the operation line generation device, a nearest operation path of the agricultural machine may be generated in real time based on the position of the agricultural machine and a selected reference operation reference line, or several paths may be generated at once. For the pre-generated routes, a nearest path may further be selected for operation based on the position of the agricultural machine.

In one embodiment, after the current operation route is determined, the operation device (agricultural machine) may be controlled to move and operate on the target plot based on the current operation route through automatic or manual control. Optionally, the current operation route may be displayed in a way that is achievable. An operator (agricultural machine operator) may know a distance between the operation device and the plot boundary based on the current operation route, so that the operator may choose a stop timing for the operation device, thereby improving an operation coverage area. For example, when the operation on the current operation route is completed, the agricultural machine is closer to the plot boundary. At this time, the operator may control the operation device to stop and turn round to a next operation route to continue the operation. As the position for turning round is closer to the plot boundary, the operation coverage area for the target plot may be larger. There is no need for the operator to determine the stop timing based on experience or manual observation, thereby avoiding a reduction in the operation coverage area of a straight-line section as the stop timing is determined to be too early.

In one solution, when the current operation route is determined within the target plot based on the reference operation reference line, a first operation route and/or a second operation route adjacent to the current operation route within the target plot may also be determined. The first operation route and the second operation route are on both sides of the current operation route, respectively. For example, the first operation route may be a previous operation path of the operation device, and the second operation route may be a next operation path of the operation device. After the operation on the current operation route is completed, the operation device may be controlled to turn to the second operation route to continue the operation. Optionally, the operator may determine the stop timing based on the current operation route and the boundary information of the target plot, and determine a turning direction based on a relative position of the current operation route and the second operation route, thereby effectively improving work efficiency while increasing the operation coverage area.

S103: generating, based on the edge-sweeping reference line, an edge-sweeping operation route within the target plot, the edge-sweeping operation route being used for an operation device to perform edge-sweeping operation after completing, based on the current operation route, operation of a main plot within the target plot.

The edge-sweeping operation route within the target plot is generated based on the edge-sweeping reference line and may be a route for the operation device to perform edge-sweeping operation. The edge-sweeping operation route may include boundary straight segments and boundary curve segments. The boundary straight segment may be a relatively straight boundary of the target plot and may be used as an operation line to fill a turning-round segment of the reference operation route.

In one embodiment, after the operation on the main plot of the target plot is completed based on the current operation route, the operation device (agricultural machine) is controlled to perform edge-sweeping operation on the target plot based on the edge-sweeping operation route through automatic or manual control. As the boundary of the target plot is fitted by the edge-sweeping operation route, an operator of the agricultural machine may grasp the distance between the agricultural machine and the plot boundary through the display of the current operation route and the edge-sweeping operation route, so that the operator may choose a reasonable stop timing to and perform edge-sweeping operation based on the edge-sweeping operation route. The operation device may be driven along a curved edge of the target plot to perform edge-sweeping operation, thereby improving an operation coverage rate of the target plot.

FIG. 2 is a schematic diagram of an edge-sweeping operation route provided by an embodiment of the present application. Referring to FIG. 2, since the operation device has a turning radius during an operation process, there will be a certain area around endpoints of the reference operation route for the operation device to turn round. No agricultural operation is performed in the area for turning round. Therefore, the operation device may perform edge-sweeping operations on boundary straight segments, to supply missing operation in the area for turning round and improve an operation coverage rate of the target plot. The boundary curve segments are usually used in scenarios where the boundary curve has a large angle with the reference operation route. When characteristics of the boundary curve are relatively obvious, it is difficult to achieve coverage on a plot by using a plurality of straight segments. Therefore, a collision-free curve is generated and shrunk inward the plot to generate a curve segment for operation. The main plot may be a plot where the current operation route is located (a plot where moves and operates in a straight line within the target plot).

In one embodiment, when the edge-sweeping operation route within the target plot is generated based on the edge-sweeping reference line, the edge-sweeping reference line may be translated inward into the target plot based on a preset quantity of edge-sweeping operation lines to obtain the edge-sweeping operation route within the target plot.

The quantity of the edge-sweeping operation lines provided in the present solution may be preset according to requirements or may be a default number. For example, if the quantity of the edge-sweeping operation lines is N, the edge-sweeping reference line may be translated inward into the target plot N times, to obtain the edge-sweeping operation route within the target plot. After the operation of the main plot within the target plot is completed on the current operation route, the operation device is controlled to perform an edge-sweeping operation according to the determined edge-sweeping operation route. For example, for an irregular plot, users may also select irregular boundary lines, such as boundary straight segments, as the edge-sweeping reference line through the operation line generation device. The system may automatically generate a plurality of edge-sweeping operation routes based on the edge-sweeping reference line, and may also provide a function to set a generation quantity of the edge-sweeping operation routes in an interactive interface, allowing users to customize the generation quantity of the edge-sweeping operation routes as needed.

As described above, by determining a reference operation reference line and an edge-sweeping reference line within a target plot based on boundary information of a target plot, a current operation route is generated based on the reference operation reference line, and an edge-sweeping operation route is generated based on the edge-sweeping reference line. When operation of a main plot within the target plot is completed based on the current operation route, a stop timing may be determined based on the current operation route and the boundary information of the target plot, and the operation device may move to the next operation route to continue the operation. The stop timing of the operation device is closer to the plot boundary, thereby effectively improving an operation coverage area. After the operation of the main plot within the target plot is completed based on the current operation route, an edge-sweeping operation may be performed on the target plot based on the roadside reference line, thereby improving an operation coverage rate of the target plot. By uniformly managing different operation lines within the target plot, a process of repeated marking is omitted, thereby reducing management difficulty of different operation lines. By obtaining the boundary information of the target plot, integrity and accuracy of the target plot data are effectively ensured, and situations such as missing measurements or ignoring corners of the target plot may be effectively avoided. Based on the boundary information, the reference operation reference line and the edge-sweeping reference line are determined from a plurality of plot boundaries of the target plot, which may improve planning efficiency of the reference operation route and the edge-sweeping operation route within the target plot. Based on the reference operation reference line, the current operation route within the target plot is determined.

Through the user's planning of the current operation route, work efficiency of the operation device may be improved, and the operator may choose an appropriate stop timing to improve the operation coverage area. Based on the edge-sweeping reference line, the edge-sweeping operation route within the target plot is generated. The edge-sweeping operation route is used for the operation device to perform edge-sweeping operations after the operation of the main plot within the target plot is completed based on the current operation route, which may supply unexecuted operations in a turning-round area and also enable the operation device to automatically operate along a curved boundary, thereby improving the operation coverage rate of the target plot.

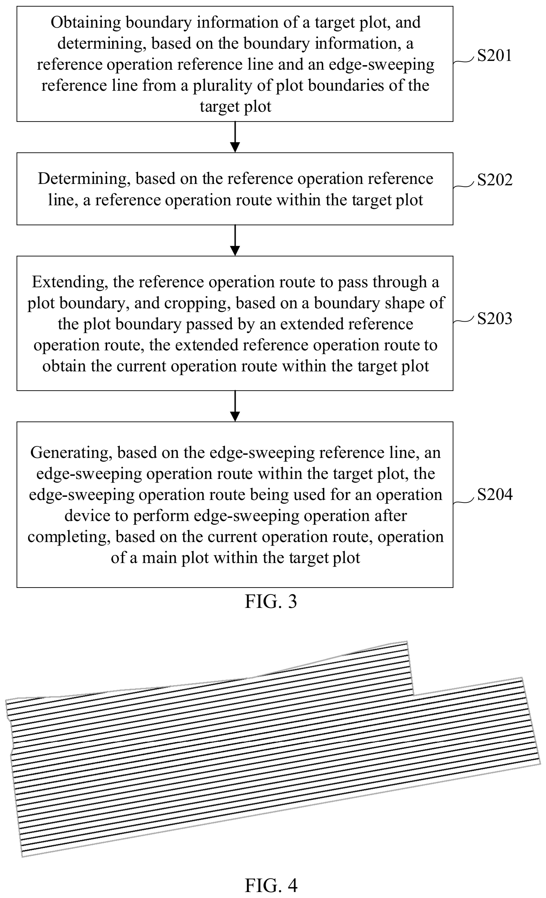

FIG. 3 is a schematic diagram of a method for determining, based on a reference operation reference line, a current operation route within a target plot provided by an embodiment of the present application. This operation line generation method is a specific implementation of the above-mentioned operation line generation method. Referring to FIG. 3, the method includes:

S201: obtaining boundary information of a target plot, and determining, based on the boundary information, a reference operation reference line and an edge-sweeping reference line from a plurality of plot boundaries of the target plot.

S202: determining, based on the reference operation reference line, a reference operation route within the target plot.

In one embodiment, the reference operation route may be obtained by translating and copying the operation reference line. A quantity of reference operation routes is calculated according to an actual requirement.

In one embodiment, the operation line generation method provided by the present solution, when determining, based on the reference operation reference line, the reference operation route, may include steps S2021 to S2023:

S2021: determining, based on endpoint position information of the reference operation reference line and device position information of the operation device, a first distance from the operation device to the reference operation reference line.

In one embodiment, the device position information of may be determined through a positioning device installed in the operation device. The position information may include coordinates of the operation device, such as coordinates of the operation device as P (xp, yp), and a relative position of the operation device within the target plot. The first distance may be used to represent a distance between the operation device and the reference operation reference line, and the first distance may be represented by d. When the coordinate point P of the operation device is located on a first side (e.g., a left side) of a reference operation reference line AB, the distance d is negative. When the coordinate point P of the operation device is located on a second side (e.g., a right side) of the reference operation reference line AB, the distance d is positive. If endpoints of the reference operation reference line are A (xa, ya) and B (xb, yb), respectively, then the first distance from the agricultural machine to the reference operation reference line may be calculated by the following formula:

$$d = -\sin(\theta) * (x_p \text{-} x_a) + \cos(\theta) * (y_p \text{-} y_a)$$

Therein, $\theta$ is a direction from point A to point B, which may be calculated based on the coordinates of points A and B by the following formula:

$$\theta = \arctan (y_b \text{-} y_a / x_b \text{-} x_a)$$

S2022: determining, based on the first distance and an operation spacing, a quantity of translations.

The preset operation spacing may be set according to operation requirements of the operation device, and the operation spacing may be preset in the operation line generation device, which may be represented as w. The quantity of translations may be represented as t, and the quantity of translations may be calculated by the following formula:

$$t = \frac{|d|}{w}$$

Therein, the quantity of translations is rounded to a nearest integer.

S2023: determining, based on the quantity of translations and the reference operation reference line, the reference operation route.

The reference operation route is determined by calculating coordinates of operation line of a current position of the agricultural machine based on the quantity of translations obtained through calculation and the endpoint coordinates of the reference operation reference line.

In one embodiment, the current operation route may be determined based on the endpoint position information of the reference operation reference line, the quantity of translations, the operation spacing, the direction of the operation device relative to the reference operation reference line, and an offset. The offset may be determined based on a clockwise direction of a boundary of the target plot, the operation spacing, and a preset offset coefficient.

Therein, the offset provided by the present solution may be an offset of the operation device relative to the operation reference line. The clockwise direction of the boundary of target plot may be used to set a direction of path translation to be towards an interior of the target plot. The plot boundary provided by the present solution is stored in an array in a form of boundary point positioning data, and the clockwise direction of the boundary may be determined as clockwise or counterclockwise based on a storage order of the stored boundary point positioning data. The offset coefficient may be preset in the operation line generation device. In one implementation, the offset may be determined based on a product of the clockwise direction of the boundary of the target plot, the operation spacing, and the preset offset coefficient. Optionally, the preset offset coefficient may be set to 0.5. On this basis, the current operation route may be calculated by the following formula:

$$\begin{bmatrix} x_a' \\ y_a' \\ 1 \end{bmatrix} = \begin{bmatrix} \cos(\theta) & -\sin(\theta) & x_a \\ \sin(\theta) & \cos(\theta) & y_a \\ 0 & 0 & 1 \end{bmatrix} \begin{bmatrix} 0 \\ \operatorname{sgn}(d) * w * t + 0.5 * w * p \\ 1 \end{bmatrix}$$

$$\begin{bmatrix} x_a' \\ y_a' \\ 1 \end{bmatrix} = \begin{bmatrix} \cos(\theta) & -\sin(\theta) & x_a \\ \sin(\theta) & \cos(\theta) & y_a \\ 0 & 0 & 1 \end{bmatrix} \begin{bmatrix} 0 \\ \operatorname{sgn}(d) * w * t + 0.5 * w * p \\ 1 \end{bmatrix}$$

Therein, p represents the clockwise direction of the boundary, which may be determined based on the storage order of the boundary point positioning data. If $p=1$, it means that the boundary is counterclockwise, and if $p=-1$, it means that the boundary is clockwise. By setting the clockwise direction of the boundary, it may be effectively ensured that the generated path is located within the target plot, which has higher reliability compared to a method of comparing coordinate points.

S203: extending the reference operation route to pass through a plot boundary, and cropping, based on a boundary shape of the plot boundary passed by an extended reference operation route, the extended reference operation route to obtain the current operation route within the target plot.

It needs to be explained that since the target plot may be an irregular shape, there may be relatively short boundaries, and the reference operation reference line and the reference operation route will also be relatively short. Directly translating and copying the reference line will result in a relatively short reference operation route, leading to a smaller operation range for the agricultural machine. Therefore, the reference operation route is extended to cross the boundary of the target plot, that is, two endpoints of the reference operation route are extended outside the target plot boundary, and the extended reference operation route is cropped based on the boundary shape of the plot boundary passed by the extended reference operation route. The cropped reference operation route is the current operation route, which may effectively improve an operation coverage rate of the agricultural machine.

In one embodiment, the operation line generation method provided by the present solution includes at least one of the following methods when cropping, based on a boundary shape of the plot boundary passed by an extended reference operation route, the extended reference operation route to obtain the current operation route within the target plot:

Method 1: cropping, based on the plot boundary passed by the extended reference operation route, the extended reference operation route to obtain the current operation route within the target plot when the boundary shape of the plot boundary passed by the extended reference operation route is a convex polygon.

Method 2: cropping, based on the plot boundary passed by the extended reference operation route, the extended reference operation route to obtain a plurality of candidate operation lines within the target plot when the boundary shape of the plot boundary a concave polygon, and determining a candidate operation line closest to the operation device as the current operation route.

If the boundary shape of the plot boundary passed by the extended reference operation route is the convex polygon, then the extended reference operation route intersects the plot boundary at two points. The operation route may be directly obtained by cropping, based on the plot boundary passed by the extended reference operation route, the extended reference operation route. If the boundary shape of the plot boundary passed by the extended reference operation route is the concave polygon, the extended reference operation route intersects the plot boundary at more than two points, and a plurality of line segments will be obtained by cropping, based on the plot boundary passed by the extended reference operation route, the extended reference operation route. These line segments may be used as candidate operation lines, and a candidate operation line closest to the operation device may be selected as the operation route.

FIG. 4 is a schematic diagram of reference operation reference lines for a concave polygon provided by an embodiment of the present application. Referring to FIG. 4, if the boundary shape of the plot boundary passed by the extended reference operation route is the concave polygon, then a plurality of operation routes will be obtained by cropping, based on the plot boundary passed by the extended reference operation route, the extended reference operation route. The plurality of operation routes are candidate operation lines. Endpoint coordinates of each candidate operation line is obtained to calculate a distance from the operation device to each candidate operation line, and a candidate operation line with a shortest distance to the operation device is determined as the current operation route.

Optionally, the current operation route may be visualized on an electronic map corresponding to the target plot, which may better display operation-related information on an operation interaction terminal and improve operation efficiency. The operation-related information may be a distance from a current agricultural machine position to a nearest endpoint of the current operation line, which is also a distance from an agricultural machine to the boundary. By visualizing the distance in real-time, or by displaying the position of the agricultural machine and the current operation line on the target plot, the operator may better grasp a progress of the operation and stop and change lines at an appropriate position.

S204: generating, based on the edge-sweeping reference line, an edge-sweeping operation route within the target plot, the edge-sweeping operation route being used for an operation device to perform edge-sweeping operation after completing, based on the current operation route, operation of a main plot within the target plot.

In view of above, by determining, based on boundary information of a target plot, a reference operation reference line and an edge-sweeping reference line within the target plot are determined, a current operation route is generated based on the reference operation reference line, and an edge-sweeping operation route is generated based on the edge-sweeping reference line. When operation of a main plot within the target plot is completed based on the current operation route, a stop timing may be determined based on the current operation route and the boundary information of the target plot and the operation device may be moved to the next operation route to continue the operation, so that the stop timing of the operation device is closer to a plot boundary, effectively improving an operation coverage area. After the operation of the main plot within the target plot is completed based on the current operation route, the edge-sweeping operation may be performed on the target plot based on the roadside reference line, thereby improving an operation coverage rate of the target plot. Meanwhile, by uniformly managing different operation lines within the target plot, a process of repeated marking is omitted, thereby reducing management difficulty of different operation lines. By determining the reference operation route based on the reference operation reference line, and determining a first distance from the operation device to the reference operation reference line based on the endpoint position information of the reference operation reference line and the device position information of the operation device, the position of the operation device relative to the reference operation line may be accurately represented, and the quantity of translations may be quickly determined based on the first distance. A reference operation route may be quickly planed based on the quantity of translations and the reference operation reference line, allowing the operation device to work according to the reference operation route, avoiding repeated driving within the target plot, and further improving the work efficiency of the operation device. By extending the reference operation route to pass through the plot boundary, a large operation coverage rate of the operation device may be ensured despite different plot shapes, avoiding direct copying of the reference operation reference line, and improving the operation coverage rate of the target plot.

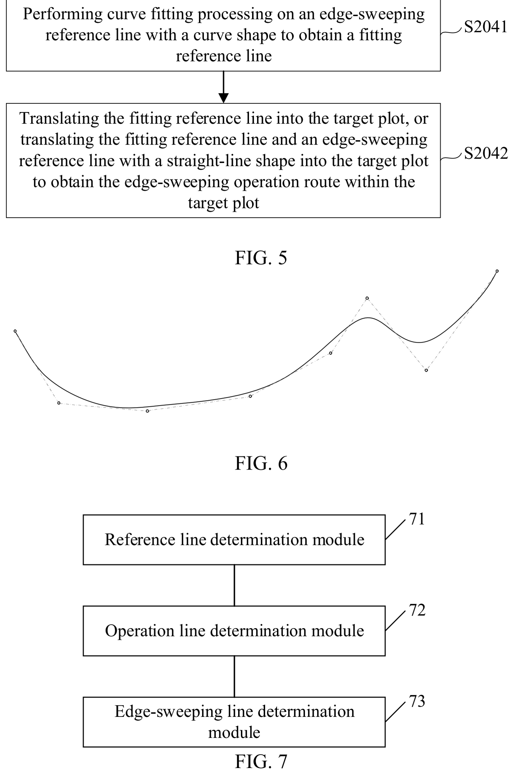

FIG. 5 is a schematic flowchart of a method for generating, based on an edge-sweeping reference line, an edge-sweeping operation route within a target plot provided by an embodiment of the present application. Referring to FIG. 5, the present solution includes steps S2041 to S2042 when generating, based on the edge-sweeping reference line, the edge-sweeping operation route within the target plot:

S2041: performing curve fitting processing on an edge-sweeping reference line with a curve shape to obtain a fitting reference line.

In one embodiment, NURBS curve fitting may be used to perform the curve fitting processing. After offset of a control point, equidistant translation is performed. The fitting reference line is a curve and may be a reference line for determining the edge-sweeping operation route.

FIG. 6 is a schematic diagram of a fitting reference line provided by an embodiment of the present application. Referring to FIG. 6, straight line segments are part of the boundary of the target plot, the various points in the figure are first control points determined based on vertices of the plot boundary, and the curve in the figure is the fitting reference line obtained by performing fitting to a plurality of first control points by using NURBS curve algorithm.

In one embodiment, according to the operation line generation method provided by the present solution, the performing curve fitting on an edge-sweeping reference line with a curve shape to obtain a fitting reference line includes: determining, based on the edge-sweeping reference line with the curve shape, a plurality of first control points, and generating, based on the plurality of first control points, a planar curve; and determining, based on the planar curve, the fitting reference line.

The first control points may be vertices of the straight edge segments within the target plot or points on curved edge segments within the target plot. The points on the curved edge may be obtained by using a curve sampling algorithm to acquire the first control points on the curved edge segments. The planar curve is generated based on the plurality of first control points, and a fitting reference line is determined based on the planar curve.

In one embodiment, according to the operation line generation method provided by the present solution, the determining, based on the planar curve, the fitting reference line, may include: when there is a curve point, in the planar curve, located outside the target plot, offsetting a first control point corresponding to the curve point located outside the target plot into the target plot to obtain a second control point; regenerating, based on the plurality of first control points and the second control point, the planar curve; and determining, based on a latest planar curve, the fitting reference line.

The second control points may be points generated after the first control points are offset. After each second control point is determined, a new curve is generated by fitting the second control points, and the new curve is determined as the fitting reference line. After the fitting curve is generated, whether there are curve points, in the generated curve, located outside the target plot is first determined. If there are, first control points corresponding to the curve points located outside the target plot are offset to the inside of the target plot. The first control points are offset to obtain the corresponding second control points.

In one embodiment, according to the operation line generation method provided by the present solution, the offsetting the first control point corresponding to the curve point located outside the target plot into the target plot to obtain the second control point may include: offsetting, based on a distance from the curve point, in the planar curve, located outside the target plot to the corresponding first control point, the first control point corresponding to the curve point located outside the target plot into the target plot to obtain the second control point.

The distance from the curve point located outside the target plot to the corresponding first control point is a translation distance from the first control point to the second control point, which may be represented as m. The first control point corresponding to the curve point located outside the target plot is translated to the inside of the target plot by *m,* to obtain the corresponding second control point. Then NURBS curve algorithm is used to fit the second control points to obtain a new planar curve. Based on this, it is further determined whether there are still parts of the new curve located outside the boundary line of the target plot. If there are, a same operation for the parts located outside the target boundary is performed. An offset at this time is determined based on a distance between the points located outside the boundary line in the new curve and the corresponding $N_{th}$ control points corresponding to the original boundary line. In this way iteration is performed until an updated curve is entirely within the target plot, and the fitting reference line is determined based on the planar curve entirely within the target plot.

S2042: translating the fitting reference line into the target plot, or translating the fitting reference line and an edge-sweeping reference line with a straight-line shape into the target plot to obtain the edge-sweeping operation route within the target plot, the edge-sweeping operation route being used for the operation device to perform edge-sweeping operation after the operation on the main plot of the target plot is completed based on the current operation route.

The fitting reference line determined is translated to the inside of the target plot, or the edge-sweeping reference line with the straight-line shape is translated to the inside of the target plot, to obtain the edge-sweeping operation route within the target plot. In one embodiment the translating the fitting reference line into the target plot to obtain the edge-sweeping operation route is represented by the following formula:

$$C_{off}(u) = C(u) \pm m \times N(u)$$
$$N(u) = \left( \frac{-\dot{y}(u)}{\sqrt{x(u)^2 + y(u)^2}}, \quad \frac{\dot{x}(u)}{\sqrt{x(u)^2 + y(u)^2}} \right)$$

Therein, $C_{off}(u)$ is the edge-sweeping operation route, $C(u)$ is the fitting reference line, m is a preset translation distance of the fitting reference line, $N(u)$ is a unit normal vector of the fitting reference line $C(u)$ at point $(x(u), y(u))$, and $\dot{x}(u)$ and $\dot{y}(u)$ are first derivatives of $x(u)$ and $y(u)$.

In view of above, by performing curve fitting processing on an edge-sweeping reference line with a curved shape, the fitting reference line is obtained, thereby avoiding a low coverage rate of a plurality of straight segments in a case where characteristics of the boundary are more obvious, and improving the operation coverage rate of the target plot. In a case where there are curve points located outside the target plot in the planar curve, the first control points corresponding to the curve points located outside the target plot are offset to the inside of the target plot to obtain the second control points; and the planar curve is re-generated based on the first control points and the second control points. The fitting reference line is determined based on the latest planar curve. By performing iteration on an offset value of the control points, the control points are ensured to be within the planar curve, making the latest planar curve entirely within the plot. By translating the fitting reference line to the inside of the target plot, or translating the fitting reference line and an edge-sweeping reference line with a straight-line shape to the inside of the target plot, the edge-sweeping operation route is obtained within the target plot, which is used for the operation device to perform edge-sweeping operation after the operation on the main plot of the target plot is completed based on the current operation route, so that a plurality of operation routes may be quickly planed, thereby improving operation efficiency of agricultural operations.

FIG. 7 is a schematic structural diagram of an operation line generation apparatus provided by an embodiment of the present application. Referring to FIG. 7, the operation line generation apparatus includes: a reference line determination module 71, an operation line determination module 72, and an edge-sweeping line determination module 73.

Therein, the reference line determination module 71 is configured to obtain boundary information of a target plot, and determining, based on the boundary information, a reference operation reference line and an edge-sweeping reference line from a plurality of plot boundaries of the target plot; the operation line determination module 72 is configured to determine, based on the reference operation reference line, a current operation route within the target plot; the edge-sweeping line determination module 73 is configured to generate, based on the edge-sweeping reference line, an edge-sweeping operation route within the target plot, the edge-sweeping operation route being used for an operation device to perform edge-sweeping operation after completing, based on the current operation route, operation of a main plot within the target plot.

In view of above, by determining, based on boundary information of a target plot, a reference operation reference line and an edge-sweeping reference line within the target plot, a current operation route is generated based on the reference operation reference line, and an edge-sweeping operation route is generated based on the edge-sweeping reference line. When operation of a main plot within the target plot is completed based on the current operation route, a stop timing may be determined based on the current operation route and the boundary information of the target plot and the operation device may be moved to the next operation route to continue the operation, so that the stop timing of the operation device is closer to a plot boundary, effectively improving an operation coverage area. After the operation of the main plot within the target plot is completed based on the current operation route, edge-sweeping operation may be performed on the target plot based on the edge-sweeping reference line, thereby improving an operation coverage rate of the target plot. Meanwhile, by uniformly managing different operation lines within the target plot, a process of repeated marking is omitted, thereby reducing management difficulty of different operation lines.

In one embodiment, the operation line generation apparatus may further include a reference operation route determination module, which is configured to determine, based on the reference operation reference line, a reference operation route;

The operation line determination module 71 is specifically configured to extend the reference operation route to pass through a plot boundary, and cropping, based on a boundary shape of the plot boundary passed by an extended reference operation route, the extended reference operation route to obtain the current operation route within the target plot.

In one embodiment, the operation line generation apparatus may further include a distance determination module and a translation quantity determination module.

The distance determination module is configured to determine, based on endpoint position information of the reference operation reference line and device position information of the operation device, a first distance from the operation device to the reference operation reference line.

The translation quantity determination module is configured to determine, based on the first distance and an operation spacing, a quantity of translations.

The reference operation route determination module is specifically configured to determine, based on the quantity of translations and the reference operation reference line, the reference operation route.

In one embodiment, the operation line determination module 72 is specifically configured to determine, based on the endpoint position information of the reference operation reference line, the quantity of translations, the operation spacing, a direction of the operation device relative to the reference operation reference line and an offset, the current operation route, wherein the offset is determined based on a clockwise direction of a boundary of the target plot, the operation spacing, and a preset offset coefficient.

In one embodiment, the offset is determined based on a product of the clockwise direction of the boundary of the target plot, the operation spacing, and the preset offset coefficient, the preset offset coefficient being 0.5.

In one embodiment, the operation line determination module 72 is further specifically configured to crop, based on the plot boundary passed by the extended reference operation route, the extended reference operation route to obtain the current operation route within the target plot when the boundary shape of the plot boundary passed by the extended reference operation route is a convex polygon; and

crop, based on the plot boundary passed by the extended reference operation route, the extended reference operation route to obtain a plurality of candidate operation lines within the target plot when the boundary shape of the plot boundary a concave polygon, and determining a candidate operation line closest to the operation device as the current operation route.

In one embodiment, the edge-sweeping line determination module 73 is specifically configured to translate, based on a preset quantity of edge-sweeping operation lines, the edge-sweeping reference line into the target plot to obtain the edge-sweeping operation route within the target plot.

In one embodiment, the operation line generation apparatus may further include: a reference line fitting module.

The reference line fitting module is configured to perform curve fitting processing on an edge-sweeping reference line with a curve shape to obtain a fitting reference line.

The edge-sweeping line determination module 73 is specifically configured to translate the fitting reference line into the target plot, or translating the fitting reference line and an edge-sweeping reference line with a straight-line shape into the target plot to obtain the edge-sweeping operation route within the target plot.

In one embodiment, the operation line generation apparatus may further include a planar curve generation module, configured to determine, based on the edge-sweeping reference line with the curve shape, a plurality of first control points, and generating, based on the plurality of first control points, a planar curve; and

a reference line fitting module, configured to determine, based on the planar curve, the fitting reference line.

In one embodiment, the operation line generation apparatus may further include a second control point determination module, configured to offset, based on a distance from the curve point, in the planar curve, located outside the target plot to the corresponding first control point, the first control point corresponding to the curve point located outside the target plot into the target plot to obtain the second control point;

a planar curve generation module is configured to regenerate, based on the plurality of first control points and the second control point, the planar curve; and

a reference line fitting module is configured to determine the fitting reference line based on the latest planar curve.

In one embodiment, the second control point determination module is specifically configured to offset, based on a distance from the curve point, in the planar curve, located outside the target plot to the corresponding first control point, the first control point corresponding to the curve point located outside the target plot into the target plot to obtain the second control point.

In one embodiment, the translating the fitting reference line into the target plot to obtain the edge-sweeping operation route is represented by the following formula:

$$C_{off}(u) = C(u) \pm m \times N(u)$$

$$N(u) = \left( \frac{-\dot{y}(u)}{\sqrt{x(u)^2 + y(u)^2}}, \quad \frac{\dot{x}(u)}{\sqrt{x(u)^2 + y(u)^2}} \right)$$

Therein, $C_{off}(u)$ is the edge-sweeping operation route, $C(u)$ is the fitting reference line, m is a preset translation distance of the fitting reference line, $N(u)$ is a unit normal vector of the fitting reference line $C(u)$ at point $(x(u), y(u))$, and $\dot{x}(u)$ and $\dot{y}(u)$ are first derivatives of $x(u)$ and $y(u)$.

It should be noted that in the embodiments of the operation line generation apparatus described above, the included units and modules are only divided according to functional logic, but are not limited to the above division, as long as the corresponding functions may be achieved. In addition, the specific names of the functional units are only for the convenience of distinguishing each other and are not used to limit the protection scope of the embodiments of the present application.

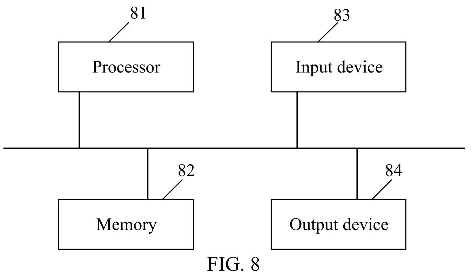

The embodiments of the present application also provide an operation line generation device, which may integrate the operation line generation apparatus provided by the embodiments of the present application. FIG. 8 is a schematic structural diagram of an operation line generation device provided by an embodiment of the present application. Referring to FIG. 8, the operation line generation device includes: an input device 83, an output device 84, a memory 82, and one or more processors 81. The memory 82 is configured to store one or more programs. When the one or more programs are executed by one or more processors 81, the one or more processors 81 are configured to implement the operation line generation method provided in the above embodiments. The input device 83, the output device 84, the memory 82, and the processor 81 may be connected via a bus or other means, with FIG. 8 illustrating an example of bus connection.

The memory 82, as a computer-readable storage medium, may be used to store software programs, computer-executable programs, and modules, such as the program instructions/modules corresponding to the operation line generation method provided in any embodiment of the present application (e.g., the reference line determination module 71, the operation line determination module 72, and the edge-sweeping line determination module 73 in the operation line generation apparatus). The memory 82 may mainly include a program storage area and a data storage area, where the program storage area may store an operating system and application programs required for at least one function; the data storage area may store data created based on the use of the device. In addition, the memory 82 may include high-speed random-access memory and may also include non-volatile memory, such as at least one magnetic disk storage device, flash memory device, or other non-volatile solid-state storage devices. In some instances, the memory 82 may further include memory remotely located relative to the processor 81, and these remote memories may be connected to the device via a network. Examples of the aforementioned network include but are not limited to the Internet, intranets, local area networks, mobile communication networks, and combinations thereof.

The input device 83 may be used to receive input digital or character information and generate key signal inputs related to user settings and function control of the device. The output device 84 may include a display device such as a display screen.

The processor 81 is configured to execute various functional applications and data processing of the device by running software programs, instructions, and modules stored in the memory 82, thereby implementing the aforementioned operation line generation method.

The operation line generation apparatus, device, and computer provided above may be used to execute the operation line generation method provided in any of the above embodiments, possessing corresponding functions and beneficial effects.

The embodiments of the present application also provide a storage medium used for storing computer-executable instructions. When executed by a computer processor, the computer-executable instructions are used to execute the operation line generation method provided in the above embodiments. The operation line generation method includes: obtaining boundary information of a target plot, and determining, based on the boundary information, a reference operation reference line and an edge-sweeping reference line from a plurality of plot boundaries of the target plot; determining, based on the reference operation reference line, a current operation route within the target plot; and generating, based on the edge-sweeping reference line, an edge-sweeping operation route within the target plot, the edge-sweeping operation route being used for an operation device to perform edge-sweeping operation after completing, based on the current operation route, operation of a main plot within the target plot.

The storage medium, refers to any of various types of memory devices or storage devices. The term "storage medium" is intended to include: installation media, such as CD-ROMs, floppy disks, or tape devices; computer system memory or random-access memory, such as DRAM, DDR RAM, SRAM, EDO RAM, Rambus RAM, etc.; non-volatile memory, such as flash memory, magnetic media (e.g., hard disks or optical storage); registers or other similar types of memory elements, etc. The storage medium may also include other types of memory or combinations thereof. Additionally, the storage medium may be located in the first computer system where the program is executed, or may be located in a different second computer system, which is connected to the first computer system via a network (such as the Internet). The second computer system may provide program instructions to the first computer for execution. The term "storage medium" may include two or more storage media that reside in different locations (e.g., in different computer systems connected via a network). The storage medium may store program instructions executable by one or more processors (e.g., specifically implemented as computer programs).

Of course, the storage medium used for storing computer-executable instructions provided by the embodiments of the present application is not limited to the operation line generation method provided above, but may also execute related operations in the operation line generation method provided in any embodiment of the present application.

The operation line generation device, equipment, and storage medium provided in the above embodiments may execute the operation line generation method provided in any embodiment of the present application. For technical details not described in detail in the above embodiments, please refer to the operation line generation method provided in any embodiment of the present application.

The above are only the preferred embodiments of the present application and the technical principles applied. The present application is not limited to the specific embodiments provided here. Various obvious changes, readjustments, and substitutions that may be made by those skilled in the art will not depart from the protection scope of the present application. Therefore, although the present application has been described in detail through the above embodiments, the present application is not limited to the above embodiments. Without departing from the concept of the present application, it may also include more other equivalent embodiments, and the scope of the present application is determined by the scope of the claims.

## Claims

**1.** An operation line generation method, comprising:

obtaining boundary information of a target plot, and determining, based on the boundary information, a reference operation reference line and an edge-sweeping reference line from a plurality of plot boundaries of the target plot; determining, based on the reference operation reference line, a current operation route within the target plot; and

generating, based on the edge-sweeping reference line, an edge-sweeping operation route within the target plot, the edge-sweeping operation route being used for an operation device to perform edge-sweeping operation after completing, based on the current operation route, operation of a main plot within the target plot.

2.  The operation line generation method according to claim 1, wherein the determining, based on the reference operation reference line, the current operation route within the target plot comprises:

    determining, based on the reference operation reference line, a reference operation route; and
    extending the reference operation route to pass through a plot boundary, and cropping, based on a boundary shape of the plot boundary passed by an extended reference operation route, the extended reference operation route to obtain the current operation route within the target plot.

3.  The operation line generation method according to claim 2, wherein the determining, based on the reference operation reference line, the reference operation route comprises:

    determining, based on endpoint position information of the reference operation reference line and device position information of the operation device, a first distance from the operation device to the reference operation reference line;
    determining, based on the first distance and an operation spacing, a quantity of translations; and
    determining, based on the quantity of translations and the reference operation reference line, the reference operation route.

4.  The operation line generation method according to claim 3, wherein the determining, based on the quantity of translations and the reference operation reference line, the reference operation route comprises:
    determining, based on the endpoint position information of the reference operation reference line, the quantity of translations, the operation spacing, a direction of the operation device relative to the reference operation reference line and an offset, the current operation route, wherein the offset is determined based on a clockwise direction of a boundary of the target plot, the operation spacing, and a preset offset coefficient.

5.  The operation line generation method according to claim 4, wherein the offset is determined based on a product of the clockwise direction of the boundary of the target plot, the operation spacing, and the preset offset coefficient, and the preset offset coefficient refers to 0.5.

6.  The operation line generation method according to claim 2, wherein the cropping, based on the boundary shape of the plot boundary passed by the extended reference operation route, the extended reference operation route to obtain the current operation route within the target plot comprises at least one of the following:

    cropping, based on the plot boundary passed by the extended reference operation route, the extended reference operation route to obtain the current operation route within the target plot when the boundary shape of the plot boundary passed by the extended reference operation route is a convex polygon; and
    cropping, based on the plot boundary passed by the extended reference operation route, the extended reference operation route to obtain a plurality of candidate operation lines within the target plot when the boundary shape of the plot boundary a concave polygon, and determining a candidate operation line closest to the operation device as the current operation route.

7.  The operation line generation method according to claim 1, wherein the generating, based on the edge-sweeping reference line, the edge-sweeping operation route within the target plot comprises:
    translating, based on a preset quantity of edge-sweeping operation lines, the edge-sweeping reference line into the target plot to obtain the edge-sweeping operation route within the target plot.

8.  The operation line generation method according to claim 1, wherein the generating, based on the edge-sweeping reference line, the edge-sweeping operation route within the target plot comprises:

    performing curve fitting processing on an edge-sweeping reference line with a curve shape to obtain a fitting reference line; and
    translating the fitting reference line into the target plot, or translating the fitting reference line and an edge-sweeping reference line with a straight-line shape into the target plot to obtain the edge-sweeping operation route within the target plot.

9. The operation line generation method according to claim 8, wherein the performing curve fitting processing on the edge-sweeping reference line with the curve shape to obtain the fitting reference line comprises:

determining, based on the edge-sweeping reference line with the curve shape, a plurality of first control points, and generating, based on the plurality of first control points, a planar curve; and
determining, based on the planar curve, the fitting reference line.

10. The operation line generation method according to claim 9, wherein the determining, based on the planar curve, the fitting reference line comprises:

when there is a curve point, in the planar curve, located outside the target plot, offsetting a first control point corresponding to the curve point located outside the target plot into the target plot to obtain a second control point;
regenerating, based on the plurality of first control points and the second control point, the planar curve; and
determining, based on a latest planar curve, the fitting reference line.

11. The operation line generation method according to claim 10, wherein the offsetting a first control point corresponding to the curve point located outside the target plot into the target plot to obtain the second control point comprises: offsetting, based on a distance from the curve point located outside the target plot in the planar curve to the corresponding first control point, the first control point corresponding to the curve point located outside the target plot into the target plot to obtain the second control point.

12. The operation line generation method according to claim 8, wherein the translating the fitting reference line into the target plot to obtain the edge-sweeping operation route is represented by the following formula:

$$C_{off}(u) = C(u) \pm m \times N(u)$$

$$N(u) = \left( \frac{-\dot{y}(u)}{\sqrt{x(u)^2 + y(u)^2}} , \frac{\dot{x}(u)}{\sqrt{x(u)^2 + y(u)^2}} \right)$$

wherein, $C_{off}(u)$ is the edge-sweeping operation route, $C(u)$ is the fitting reference line, m is a preset translation distance of the fitting reference line, $N(u)$ is a unit normal vector of the fitting reference line $C(u)$ at point $(x(u), y(u))$, and $\dot{x}(u)$ and $\dot{y}(u)$ are first derivatives of $x(u)$ and $y(u)$.

13. An operation line generation device, comprising: a memory and one or more processors;

wherein the memory is configured to store one or more programs; and
when the one or more programs are executed by the one or more processors, the one or more processors are configured to implement the following steps:

obtaining boundary information of a target plot, and determining, based on the boundary information, a reference operation reference line and an edge-sweeping reference line from a plurality of plot boundaries of the target plot;
determining, based on the reference operation reference line, a current operation route within the target plot; and
generating, based on the edge-sweeping reference line, an edge-sweeping operation route within the target plot, the edge-sweeping operation route being used for an operation device to perform edge-sweeping operation after completing, based on the current operation route, operation of a main plot within the target plot.

14. The operation line generation device according to claim 13, wherein the determining, based on the reference operation reference line, the current operation route within the target plot comprises:

determining, based on the reference operation reference line, a reference operation route; and
extending the reference operation route to pass through a plot boundary, and cropping, based on a boundary shape of the plot boundary passed by an extended reference operation route, the extended reference operation route to obtain the current operation route within the target plot.

**15.** The operation line generation device according to claim 14, wherein the determining, based on the reference operation reference line, the reference operation route comprises:

determining, based on endpoint position information of the reference operation reference line and device position information of the operation device, a first distance from the operation device to the reference operation reference line;

determining, based on the first distance and a preset operation spacing, a quantity of translations; and

determining, based on the quantity of translations and the reference operation reference line, the reference operation route.

**16.** The operation line generation device according to claim 15, wherein the determining, based on the quantity of translations and the reference operation reference line, the reference operation route comprises:
determining, based on the endpoint position information of the reference operation reference line, the quantity of translations, the operation spacing, a direction of the operation device relative to the reference operation reference line and an offset, the current operation route, wherein the offset is determined based on a clockwise direction of a boundary of the target plot, the operation spacing, and a preset offset coefficient.

**17.** The operation line generation device according to claim 16, wherein the offset is determined based on a product of the clockwise direction of the boundary of the target plot, the operation spacing, and the preset offset coefficient, and the preset offset coefficient refers to 0.5.

**18.** The operation line generation device according to claim 14, wherein the cropping, based on the boundary shape of the plot boundary passed by the extended reference operation route, the extended reference operation route to obtain the current operation route within the target plot comprises at least one of the following:

cropping, based on the plot boundary passed by the extended reference operation route, the extended reference operation route to obtain the current operation route within the target plot when the boundary shape of the plot boundary passed by the extended reference operation route is a convex polygon; and

cropping, based on the plot boundary passed by the extended reference operation route, the extended reference operation route to obtain a plurality of candidate operation lines within the target plot when the boundary shape of the plot boundary a concave polygon, and determining a candidate operation line closest to the operation device as the current operation route.

**19.** A non-transitory storage medium used for storing computer-executable instructions, wherein the computer-executable instructions, when executed by a computer processor, are used to implement the following steps:

obtaining boundary information of a target plot, and determining, based on the boundary information, a reference operation reference line and an edge-sweeping reference line from a plurality of plot boundaries of the target plot;

determining, based on the reference operation reference line, a current operation route within the target plot; and

generating, based on the edge-sweeping reference line, an edge-sweeping operation route within the target plot, the edge-sweeping operation route being used for an operation device to perform edge-sweeping operation after completing, based on the current operation route, operation of a main plot within the target plot.

**20.** An operation line generation apparatus, comprising a reference line determination module, an operation line determination module, and an edge-sweeping line determination module, wherein:

the reference line determination module is configured to obtain boundary information of a target plot, and determining, based on the boundary information, a reference operation reference line and an edge-sweeping reference line from a plurality of plot boundaries of the target plot;

the operation line determination module is configured to determine, based on the reference operation reference line, a current operation route within the target plot;

the edge-sweeping line determination module is configured to generate, based on the edge-sweeping reference line, an edge-sweeping operation route within the target plot, the edge-sweeping operation route being used for an operation device to perform edge-sweeping operation after completing, based on the current operation route, operation of a main plot within the target plot.

Obtaining boundary information of a target plot, and determining, based on the boundary information, a reference operation reference line and an edge-sweeping reference line from a plurality of plot boundaries of the target plot ⟋S101

Determining, based on the reference operation reference line, a current operation route within the target plot ⟋S102

Generating, based on the edge-sweeping reference line, an edge-sweeping operation route within the target plot, the edge-sweeping operation route being used for an operation device to perform edge-sweeping operation after completing, based on the current operation route, operation of a main plot within the target plot ⟋S103

FIG. 1

FIG. 2

Obtaining boundary information of a target plot, and determining, based on the boundary information, a reference operation reference line and an edge-sweeping reference line from a plurality of plot boundaries of the target plot ⟋ S201

Determining, based on the reference operation reference line, a reference operation route within the target plot ⟋ S202

Extending, the reference operation route to pass through a plot boundary, and cropping, based on a boundary shape of the plot boundary passed by an extended reference operation route, the extended reference operation route to obtain the current operation route within the target plot ⟋ S203

Generating, based on the edge-sweeping reference line, an edge-sweeping operation route within the target plot, the edge-sweeping operation route being used for an operation device to perform edge-sweeping operation after completing, based on the current operation route, operation of a main plot within the target plot ⟋ S204

FIG. 3

FIG. 4

| Performing curve fitting processing on an edge-sweeping reference line with a curve shape to obtain a fitting reference line | S2041 |

↓

| Translating the fitting reference line into the target plot, or translating the fitting reference line and an edge-sweeping reference line with a straight-line shape into the target plot to obtain the edge-sweeping operation route within the target plot | S2042 |

FIG. 5

FIG. 6

| Reference line determination module | 71 |

| Operation line determination module | 72 |

| Edge-sweeping line determination module | 73 |

FIG. 7

81

Processor

83

Input device

82

Memory

84

Output device

FIG. 8

## INTERNATIONAL SEARCH REPORT

| International application No. |
| --- |
| **PCT/CN2024/100956** |

**A. CLASSIFICATION OF SUBJECT MATTER**

G05D1/46(2024.01)i

According to International Patent Classification (IPC) or to both national classification and IPC

**B. FIELDS SEARCHED**

Minimum documentation searched (classification system followed by classification symbols)

IPC: G05D1

Documentation searched other than minimum documentation to the extent that such documents are included in the fields searched

Electronic data base consulted during the international search (name of data base and, where practicable, search terms used)

CNTXT; VEN; CNABS; ENTXTC: 作业, 扫边, 平行, 边缘, 起点, 终点, 多边形, 间距, 参考线, 基准线, EDGE, SCAN+, PARALLEL, DISTANCE, GAP, REFER+, OPERAT+

**C. DOCUMENTS CONSIDERED TO BE RELEVANT**

| Category* | Citation of document, with indication, where appropriate, of the relevant passages | Relevant to claim No. |
| --- | --- | --- |
| Y | CN 107368094 A (SHANGHAI TOPXGUN ROBOTICS CO., LTD.) 21 November 2017 (2017-11-21) description, paragraphs 0019-0035, and figures 1-2 | 1-20 |
| Y | CN 112703834 A (XAG CO., LTD.) 27 April 2021 (2021-04-27) description, paragraphs 0005-0025, and figures 1-15 | 1-20 |
| Y | CN 115855067 A (SOUTH CHINA AGRICULTURAL UNIVERSITY) 28 March 2023 (2023-03-28) description, paragraphs 10-18 | 8-12 |
| PX | CN 116880480 A (XAG CO., LTD.) 13 October 2023 (2023-10-13) entire description | 1-20 |
| A | CN 110968110 A (XAG CO., LTD.) 07 April 2020 (2020-04-07) entire description | 1-20 |
| A | CN 115617029 A (FENGJIANG INTELLIGENT SOFTWARE TECHNOLOGY (NANJING) CO., LTD.) 17 January 2023 (2023-01-17) entire description | 1-20 |

☑ Further documents are listed in the continuation of Box C.      ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **19 September 2024** | **08 October 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/100956** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2014027946 A1 (HUSQVARNA AB et al.) 20 February 2014 (2014-02-20) entire description | 1-20 |

Form PCT/ISA/210 (second sheet) (July 2022)

**INTERNATIONAL SEARCH REPORT**
Information on patent family members

International application No.

**PCT/CN2024/100956**

| Patent document cited in search report | | | Publication date (day/month/year) | Patent family member(s) | | | Publication date (day/month/year) |
|---|---|---|---|---|---|---|---|
| CN | 107368094 | A | 21 November 2017 | None | | | |
| CN | 112703834 | A | 27 April 2021 | None | | | |
| CN | 115855067 | A | 28 March 2023 | None | | | |
| CN | 116880480 | A | 13 October 2023 | None | | | |
| CN | 110968110 | A | 07 April 2020 | None | | | |
| CN | 115617029 | A | 17 January 2023 | None | | | |
| WO | 2014027946 | A1 | 20 February 2014 | US | 2015201555 | A1 | 23 July 2015 |
| | | | | US | 9497901 | B2 | 22 November 2016 |
| | | | | EP | 2885683 | A1 | 24 June 2015 |
| | | | | EP | 2885683 | A4 | 01 June 2016 |

Form PCT/ISA/210 (patent family annex) (July 2022)